# EUROPÄISCHE PATENTSCHRIFT

(11) **EP 1 180 583 B1**
(45) Veröffentlichungstag und Bekanntmachung des Hinweises auf die Patenterteilung: **31.03.2004**
(21) Anmeldenummer: 01116808.5
(22) Anmeldetag: 10.07.2001
(51) Int. Cl.: F01N 3/20, F01N 3/08

(54) **Mehrzylinder-Brennkraftmaschine mit einer Vorrichtung zum Katalysator-Heizen**
Multi-cylinder internal combustion engine with a catalyst heating device
Moteur à combustion interne multicylindres comportant un dispositif pour chauffer un catalyseur

(30) Priorität: 18.08.2000 DE 10040516
(43) Veröffentlichungstag der Anmeldung: 20.02.2002
(73) Patentinhaber: Bayerische Motoren Werke Aktiengesellschaft, 80809 München (DE)
(72) Erfinder: Müller, Peter, 81673 München (DE); Ramatschi, Stephan, 85604 Zorneding (DE); Detterbeck, Stefan, 80804 München (DE); Hasenclever, Hanns-Christian, Dr., 80809 München (DE); Preuss, Florian, 80809 München (DE)

(56) Entgegenhaltungen:
- DE-A- 4 106 249
- JP-A- 11 062 563
- US-A- 3 943 710
- US-A- 5 802 845
- US-A- 6 047 542

## Beschreibung

Die Erfindung bezieht sich auf eine Mehrzylinder-Brennkraftmaschine mit einer Vorrichtung zum Katalysator-Heizen.

Für die Abgasnachbehandlung von Saugrohr- und direkt einspritzenden Otto-Brennkraftmaschinen, die mit einem mageren Luft-Kraftstoffverhältnis betrieben werden, sind u.a. NOₓ-Speicherkatalysatoren im Einsatz. Diese Katalysatoren werden durch den im Kraftstoff enthaltenen Schwefel im Verlauf ihres Betriebes zunehmend vergiftet, wobei Schwefel an Stelle von NOₓ im Katalysator eingelagert wird. Damit ist eine Entschwefelung des Katalysators nach einer gewissen Betriebsdauer notwendig, da sich ansonsten der Katalysatorwirkungsgrad bezüglich NOₓ bis hin zu unzulässigen Werten verringert. Für die Entschwefelung muss der Katalysator mit einer Mindesttemperatur von z.B. 650° C' und einer fetten Abgaszusammensetzung beaufschlagt werden. Diese Bedingungen können z.B. während einer Autobahnfahrt erreicht werden. Wird das Fahrzeug allerdings nur in niedrigen Lasten bewegt, beispielsweise vorwiegend im Stadtverkehr, werden die Desulfatierungsbedingungen nicht erreicht. Für diesen Fall sind weitere Maßnahmen erforderlich wie z.B. eine Zündwinkelspätverstellung, eine Doppeleinspritzung oder eine sog. Bankvertrimmung, bei der eine Zylindergruppe fett und gleichzeitig die andere Zylindergruppe mager betrieben ist. Eine derartige Kraftstoffversorgung ist beispielsweise aus der DE 195 06 980 C2 bekannt.

Die Bankvertrimmung ist eine sehr wirkungsvolle Maßnahme zum Katalysator-Heizen, wobei die Kraftstoffzufuhr zu den unterschiedlichen Zylindergruppen so getroffen ist, dass sich vor dem jeweiligen Katalysator annähernd eine stöchiometrische Abgaszusammensetzung ergibt. Die exothermen Reaktionen im Katalysator führen zu einer starken Erwärmung des NOₓ-Speicherkatalysators, ohne dass die Abgasrohre vor dem Speicherkatalysator erwärmt werden müssen. Dies stellt einen deutlichen Vorteil gegenüber anderen Heizmaßnahmen dar.

Bei einer insbesondere bei großvolumigen Brennkraftmaschinen zum Einsatz kommenden mehrflutigen Abgasanlage sind jeweils ein motomaher Katalysator und ein stromab angeordneter NOₓ-Speicherkatalysator mit dem Abgas einer Bank beaufschlagt. Damit ist es mit einfachen Mitteln nicht mehr möglich, den Speicherkatalysator mittels Bankvertrimmung aufzuheizen. Lediglich eine Zylindervertrimmung ist möglich, mit der der Katalysator zu Heizen ist, wobei die im Katalysator entstehende Wärme dem nachfolgenden Speicherkatalysator zum Aufheizen dient. Hierbei ergibt sich der Nachteil eines geringen Wirkungsgrades und der weitere Nachteil einer möglichen Überhitzung und damit verbundenen Beschädigung des Katalysators. Die Problematik wird bei großvolumigen Brennkraftmaschinen noch durch den Umstand verschärft, dass auf Grund des niedrigeren Lastkollektivs im Kundenbetrieb häufigerer Heizbedarf besteht als bei kleinvolumigen Brennkraftmaschinen.

Aus der US 6, 047, 542 ist eine Mehrzylinder - Brennkraftmaschine bekannt, die wechselweise fett und mager betreibbare erste und zweite Zylindergruppen umfasst mit je einer abschnittsweise gesonderten Abgasleitung mit je einer motornah und einer motorfern angeordneten Katalysatoreinrichtung. Stromab der motorfernen Kat - Einrichtungen münden die gesonderten Abgasleitungen in einen gemeinsamen Leitungsstrang, in dem zumindest eine weitere Kat - Einrichtung installiert ist.
Die erste Zylindergruppe ist vorzugsweise fett betrieben für einen in der ersten Abgasleitung motornah angeordneten besonderen Dreiwege-Kat zur Erzeugung von Ammoniak - NH3 - , das in derselben Abgasleitung einem NH3 - Kat zuführbar ist.
Die zweite Zylindergruppe ist vorzugsweise mager betrieben für einen in der zweiten Abgasleitung motornah angeordneten ersten NOx - Speicherkat, dem in derselben Abgasleitung motorfern ein zweiter NOx - Speicherkat zugeordnet ist.
Beide Abgasleitungen sind zwischen den motomahen und den motorfernen Katalysatoreinrichtungen mittels je einer gesonderten, klappengesteuerten Verbindungsleitung verbindbar zur Steigerung einer NOx- Konversion durch eine verstärkte Ammoniakbildung. Das Ammoniak wird schließlich in der Kat - Einrichtung im gemeinsamen Leitungsstrang umgewandelt.

Ferner ist aus der US 3, 943, 710 eine Mehrzylinder - Brennkraftmaschine mit einander gegenüberliegenden Zylinderreihen bekannt, wobei jeder Zylinderreihe eine Abgasleitung zugeordnet ist mit je einem Abgaskatalysator.
Stromauf der beiden Katalysatoren sind beide Abgasleitungen miteinander verbunden zu dem Zweck, mittels einer Steuerklappe in einer der Abgasleitungen insbesondere bei Kaltstart der Brennkraftmaschine das Abgas aus beiden Zylinderbänken über nur einen der Katalysatoren zu führen zu dessen schnellerer Erwärmung. Bei Erreichen der Konversionstemperatur wird die Steuerklappe auf Durchlass gestellt, wobei über diese Abgasleitung bereits höher temperiertes Abgas dem bislang nicht durchströmten Katalysator zugeführt ist.

Der Erfindung liegt die Aufgabe zugrunde, für eine Mehrzylinder - Brennkraftmaschine eine Vorrichtung zum Katalysator - Heizen dahingehend auszubilden, dass bei einfachem Steuerungsaufwand in Verbindung mit einer einfachen baulichen Ausgestaltung ein sicheres Katalysator - Heizen für eine Reaktivierung einerseits und einer Sicherung einer Aktivierungstemperatur andererseits erzielt ist, wobei mit der Ausgestaltung zugleich eine Abgasrückführung erreicht sein soll.

Diese Aufgabe ist mit dem unabhängigen Patentanspruch gelöst.

Zum erfindungsgemäßen Heizen eines der motorfernen NOx - Speicherkatalysatoren ist eine Zylindergruppe der Brennkraftmaschine fett betrieben, während die andere Zylindergruppe gleichzeitig mager betrieben ist. Durch erfindungsgemäßes Sperren der das fette Abgas führenden Abgasleitung ist in dieser ein solcher Gegendruck erzeugt, dass das fette Abgas über die um ein vorbestimmtes Maß offengesteuerte Verbindungsleitung in die mageres Abgas führende, ungedrosselte Abgasleitung überströmt zur Ausbildung eines im wesentlichen stöchiometrischen Abgases, das im NOx - Speicherkat exotherme Reaktionen bewirkt mit der Folge einer starken Aufheizung, die einer Reaktivierung und/oder einer Sicherung einer Aktivitätstemperatur dienlich ist.
Zum Heizen des anderen NOx - Speicherkat auf die vorbeschriebene Weise wird zum einen die Bankvertrimmung vertauscht und zum anderen die andere, nunmehr fettes Abgas führende Abgasleitung gesteuert versperrt.

Mit der gesteuerten Absperrung der jeweiligen ein fettes Abgas führenden Abgasleitung ist mittels der Drosselklappe in der Verbindungsleitung zwischen den Abgasleitungen ein motorseitiger Abgas - Rückstau möglich, der eine Abgasrückführung in die fettes Abgas liefernde Zylindergruppe bewirkt mit dem nicht unerheblichen Vorteil einer selbsttätigen bzw. automatischen Drehmomentreduzierung. Damit kann in weiterer vorteilhafter Weise eine zusätzliche Drosselung der Ansaugluft gemäß einer der bekannten Maßnahmen entfallen.

Daraus ergibt sich als weiterer Vorteil für eine Mehrzylinder - Brennkraftmaschine die Verwendung einer vereinfachten Luftansauganlage, da eine zylindergruppenabhängige Ansaugdrosselung nicht erforderlich ist.

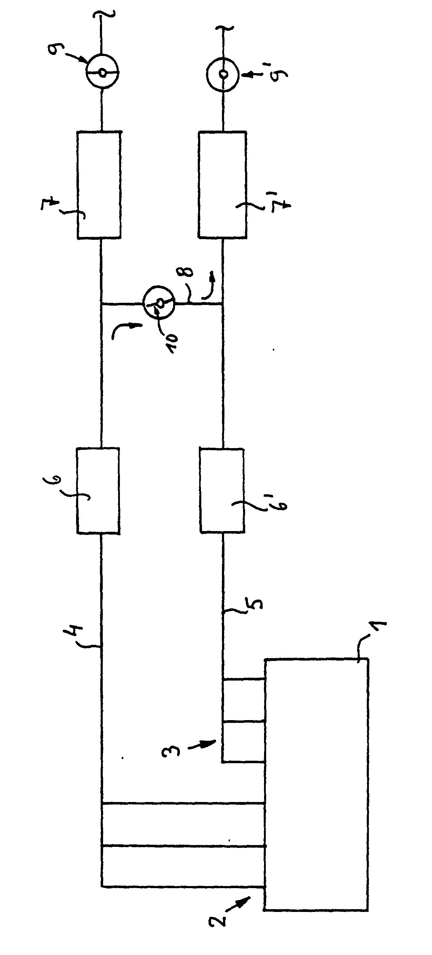

Die Erfindung ist an Hand einer in der Zeichnung schematisch dargestellten Mehrzylinder - Brennkraftmaschine beschrieben.

Eine als Reihen-Motor mit vorzugsweise 6 Zylindern ausgebildete Brennkraftmaschine (1) ist mit einer Vorrichtung zum Katalysator-Heizen ausgerüstet, die eine nicht gezeigte Gemischbildungseinrichtung zur heizgesteuerten/ heizgeregelten wechselweisen Erzeugung fetten Abgases in einer ersten Zylindergruppe (2) und mageren Abgases in einer zweiten Zylindergruppe (3) umfasst. Jede Zylindergruppe (2,3) ist mit einer gesonderten Abgasleitung (4,5) mit einem relativ motomahmen Katalysator (6,6') und einem stromab motorfemen Katalysator (7,7') ausgerüstet. Vorzugsweise sind als motomahe Katalysatoren (6,6') Dreiwege-Katalysatoren gewählt und als motorfeme Katalysatoren (7,7') NOₓ-Speicherkatalysatoren.

Wie aus der einzigen Figur weiter ersichtlich, ist zwischen beiden Abgasleitungen (4,5) stromauf der NOₓ-Speicherkatalysatoren (7,7') eine Verbindungsleitung (8) angeordnet und stromab der NOₓ-Speicherkatalysatoren (7,7') sind die Abgasleitungen (4,5) zum wechselweisen heizgesteuerten Verschließen mit Steuerorganen (9,9') ausgerüstet.

Da eine der Zylindergruppen (2,3) bei fettem Abgas gegenüber der anderen Zylindergruppe (3,2) mit magerem Abgas ein höheres Drehmoment abgibt, wird bei Heizbetrieb eines der beiden motorfemen Katalysatoren bzw. NOₓ-Speicherkatalysatoren (7,7') erfindungsgemäß das Steuerorgan (9,9') der ein fettes Abgas führenden Abgasleitung (4,5) in Schließstellung gesteuert. Damit ist in der ein fettes Abgas führenden Abgasleitung (4) der Zylindergruppe (2) ein Gegendruck erzeugt, der zum einen ein Überströmen des fetten Abgases über die Verbindungsleitung (8) in die ungedrosselte, ein mageres Abgas aus der Zylindergruppe (3) führenden Abgasleitung (5) bewirkt. Dies gibt ein annähernd stöchiometrisches Abgasgemisch, dessen exotherme Reaktionen im NOₓ-Speicherkatalysator (7') zu einer starken Aufheizung führt, die einer Reaktivierung oder einer Sicherung einer Aktivitätstemperatur dienlich ist.

Zum anderen bewirkt der vorbeschriebene Gegendruck in der Abgasleitung (4) in der Zylindergruppe (2) eine intensive Abgasrückführung mit dem Vorteil einer Drehmomentreduzierung der fett betriebenen Zylindergruppe (2) gegenüber der mager betriebenen Zylindergruppe (3). Das Ausmaß der Abgasrückführung kann vorzugsweise durch eine Drosselklappe (10) in der Verbindungsleitung (8) gesteuert sein.

Zum Heizen des NOₓ-Speicherkatalysator (7) wird die Zylindergruppe (2) auf mageres Abgas eingestellt und die Zylindergruppe (3) auf ein fettes Abgas, wobei das Steuerorgan (9') in der Abgasleitung (5) in eine Schließstellung gesteuert ist und das Steuerorgan (9) in der Abgasleitung (4) in Offenstellung gehalten ist Vorzugsweise sind die Steuerorgane (9 und 9') jeweils als eine Drehklappe ausgebildet.

Mit dem erfindungsgemäßen Einsatz von Klappen, insbesondere von Drehklappen als Steuerorgane (9,9') stromab jedes motorfemen Katalysators (7,7') ist auch bei einer mehrflutigen Abgasanlage mit einer Übersprechstelle bzw. einer Verbindungsleitung ein Katalysator-Heizen auch bei Brennkraftmaschinen möglich, bei denen die Luftzufuhr für die beiden Zylinderbänke nicht getrennt gedrosselt werden kann.

Weiterhin müssen die Klappen bzw. Drehklappen bzw. Steuerorgane (9,9') stromab der motorfemen Katalysatoren (7,7') keine extremen Anforderungen hinsichtlich innerer und äußerer Dichtheit erfüllen. Somit können relativ preisgünstige Klappen in Form von Drehklappen zum Einsatz kommen. Solche Klappen sind bereits als sog. "Akkustikklappen" im Serieneinsatz. Für den Einsatz zum Katalysator-Heizen können diese Klappen in die Abgasrohre unmittelbar stromab des motorfemen Katalysators (7,7') eingebaut werden oder aber auch aus Akkustikgründen im Bereich der Schalldämpfung bzw. Endrohre, wobei bereits vorhandene Akkustikklappen für das Katalysator-Heizen dienen können.

## Patentansprüche

1. Mehrzylinder - Brennkraftmaschine mit einer Vorrichtung zum Katalysator - Heizen, insbesondere Brennkraftmaschine von relativ großem Hubvolumen,
- die eine Gemischbildungseinrichtung zur heizgesteuerten / heizgeregelten wechselweisen Erzeugung fetten Abgases in einer ersten Zylindergruppe (2) und mageren Abgases in einer zweiten Zylindergruppe (3) umfasst, und
- jede Zylindergruppe (2,3) mit einer gesonderten Abgasleitung (4,5) mit einem relativ motomahen Dreiwege - Katalysator (6,6') und einem stromab motorfernen Nox - Speicherkatalysator (7,7') ausgerüstet ist, wobei
- zwischen beiden Abgasleitungen (4,5) stromauf der Nox - Speicherkatalysatoren (7,7') eine einzige, mittels einer Drosselklappe (10) steuerbare Verbindungsleitung (8) angeordnet ist, und
- stromab der Nox - Speicherkatalysatoren (7,7') die Abgasleitungen (4,5) zum wechselweisen heizgesteuerten Verschließen mit ggf. als Akustik - klappen dienenden Drehklappen (9,9') ausgerüstet sind, wobei
- die jeweilige Drehklappe (9,9') der ein fettes Abgas führenden Abgasleitung (4,5) in Schließstellung und
- zugleich die Drosselklappe (10) in der Verbindungsleitung (8) für eine vorbestimmte Abgasrückführung in die Zylindergruppe (2,3) mit fettem Abgas in eine Offenstellung gesteuert ist.

2. Brennkraftmaschine nach Anspruch 1, **gekennzeichnet durch**
- die Verwendung der Vorrichtung bei fehlender zylindergruppenabhängiger Luftansaugdrosselung.

## Claims

1. A multi-cylinder internal combustion engine with a catalyst-heating device, especially an engine having a relatively large stroke volume and
- comprising a mixture-forming device for alternately generating, by heating in an open or closed control loop, rich exhaust gas in a first group of cylinders (2) and lean gas in a second cylinder group (3), and
- each cylinder group (2, 3) is equipped with a separate exhaust pipe (4, 5) comprising a three-way catalyst (6, 6') relatively near the engine and an Nox storage catalyst (7, 7') downstream and remote from the engine, wherein
- a single connecting line (8) controllable by a throttle valve (10) is disposed between the two exhaust pipes (4, 5) upstream of the Nox storage catalysts (7, 7'), and
- downstream of the Nox storage catalysts (7, 7') the exhaust pipes (4, 5) are equipped with butterfly valves (9, 9'), if required in the form of acoustic valves, for alternate heat-controlled closing, wherein
- the butterfly valve (9, 9') in the exhaust pipe (4, 5) conveying rich gas is moved into the closed position and
- at the same time the butterfly valve (10) in the connecting line (8) is moved into an open position in order to recycle a set amount of exhaust gas into the cylinder group (2, 3) with rich exhaust gas.

2. An engine according to claim 1, **characterised by** use of the device in the absence of air intake throttling separately for each group of cylinders.

## Revendications

1. Moteur à combustion interne à plusieurs cylindres, équipé d'un dispositif de chauffage de pot catalytique, en particulier moteur de cylindrée relativement forte, dans lequel
- un dispositif de formation de mélange produit alternativement, pour commander et réguler le chauffage, un gaz d'échappement riche dans un premier groupe de cylindre (2) et un gaz d'échappement pauvre dans un second groupe de cylindres (3),
- chaque groupe de cylindres (2, 3) est équipé d'une conduite spécifique de gaz d'échappement (4, 5) comprenant en amont un pot catalytique à trois voies (6, 6') assez proche du moteur et en aval un pot catalytique de rétention de NOₓ (7, 7') éloigné du moteur,
**caractérisé en ce que**
- entre les deux conduites de gaz d'échappement (4, 5) est monté, en amont du pot catalytique de rétention de NOₓ (7, 7'), une conduite unique de liaison (8) qui peut être commandée par un clapet d'étranglement (10),
- en aval du pot catalytique de rétention de NOₓ (7, 7') les conduites de gaz d'échappement sont équipées, pour être obturées alternativement sous la commande de chauffage, par des clapets rotatifs (9, 9') jouant éventuellement le rôle de clapets acoustiques,
- chaque clapet rotatif (9, 9') monté dans une conduite (4, 5) parcourue par un gaz d'échappement riche est commandé à la fermeture,
- en même temps, le clapet d'étranglement (10) monté dans la conduite de liaison (8) est commandé à l'ouverture pour assurer un retour prédéfini du gaz d'échappement dans le groupe de cylindres (2, 3) à gaz d'échappement riche.

2. Moteur à combustion interne selon la revendication 1,
**caractérisé en ce que**
le dispositif est utilisé à défaut d'un dosage de l'air d'admission en fonction du groupe de cylindres.
